# EUROPÄISCHE PATENTSCHRIFT

(11) **EP 2 086 815 B1**
(45) Veröffentlichungstag und Bekanntmachung des Hinweises auf die Patenterteilung: **21.04.2010**
(21) Anmeldenummer: 07846804.8
(22) Anmeldetag: 24.11.2007
(51) Int. Cl.: B62D 1/16

(54) **LENKSÄULE FÜR EIN KRAFTFAHRZEUG**
STEERING COLUMN FOR A MOTOR VEHICLE
COLONNE DE DIRECTION POUR UN VÉHICULE AUTOMOBILE

(30) Priorität: 29.11.2006 DE 102006056582
(43) Veröffentlichungstag der Anmeldung: 12.08.2009
(73) Patentinhaber: ThyssenKrupp Presta Aktiengesellschaft, 9492 Eschen (LI)
(72) Erfinder: SCHNITZER, Rony, 9491 Ruggell (LI); HEITZ, Thomas, 9493 Mauren (LI)
(74) Vertreter: Hofmann, Ralf U.
(86) Internationale Anmeldenummer: PCT/EP2007/010233
(87) Internationale Veröffentlichungsnummer: WO 2008/064841

(56) Entgegenhaltungen:
- DE-A1- 19 629 246
- JP-A- 2002 145 078

## Beschreibung

Die Erfindung bezieht sich auf eine Lenksäule für ein Kraftfahrzeug mit einer von einer Manteleinheit drehbar gelagerten Lenkspindel und einer am Kraftfahrzeug starr befestigbaren, die Manteleinheit tragenden Befestigungseinheit, die einen Basisabschnitt, mindestens eine sich neben der Manteleinheit erstreckende Seitenwange und zumindest erste und zweite Befestigungslaschen mit Schraubenöffnungen zur Befestigung der Befestigungseinheit am Kraftfahrzeug mittels Befestigungsschrauben umfasst.

Eine Lenksäule der eingangs genannten Art ist beispielsweise aus der EP 1 612 120 A1 bekannt. Bei dieser Lenksäule ist die die Lenkspindel drehbar lagernde Manteleinheit im geöffneten Zustand einer Fixiereinrichtung in Längsrichtung der Lenkspindel und in Richtung einer Neigungsverstellung der Lenkspindel gegenüber einer die Manteleinheit tragenden Befestigungseinheit verstellbar. Im geschlossenen Zustand der Fixiereinrichtung ist die eingestellte Position der Manteleinheit gegenüber der Befestigungseinheit fixiert. Die Befestigungseinheit wird mittels Schrauben an der Karosserie des Kraftfahrzeugs angeschraubt, wobei die Schraubenlöcher vier Befestigungslaschen durchsetzen, welche von der Befestigungseinheit seitlich abstehen und hierbei rechtwinklig zu Seitenwangen der Befestigungseinheit ausgerichtet sind, zwischen denen die Manteleinheit in Richtung der Neigungsverstellung der Lenkspindel in geöffnetem Zustand der Fixiereinrichtung verschiebbar geführt ist.

Bei der aus der EP 1 609 693 A2 bekannten Lenksäule erfolgt die Befestigung an der Karosserie des Kraftfahrzeugs ebenfalls durch Anschrauben einer Befestigungseinheit, welche die die Lenkspindel drehbar lagernde Manteleinheit trägt. Die Neigung der Lenkspindel ist motorisch verstellbar. Etwa auf der Achsialposition des Verstelleingriffs besitzt die Befestigungseinheit seitlich abstehende Befestigungslaschen mit Schraubenöffnungen, um die Lenksäule an der Karosserie des Kraftfahrzeuges mittels Schrauben zu befestigen, deren Achsen parallel zu Seitenwangen der Befestigungseinheit ausgerichtet sind, zwischen denen die Manteleinheit geführt ist.

In der DE 103 52 224 A1 ist eine Lenksäule beschrieben, bei der eine stabile Befestigung an der Karosserie des Kraftfahrzeugs erreicht werden soll. Hierzu wird eine Befestigungseinheit vorgeschlagen, die sowohl am Cockpit-Querträger als auch an der Stirnwand zwischen Motor- und Fahrgastraum befestigt wird. Diese Befestigungseinheit ist massiv ausgebildet und besteht aus einem Gussteil. Im Bereich der Lenksäule, in dem das Klemmsystem zum wahlweisen Fixieren bzw. Freigeben einer Verstellung der Lenksäule angeordnet ist, wird die Befestigungseinheit mit Schrauben am Fahrzeug befestigt, deren Achsen parallel zu den Seitenwangen, die die Manteleinheit bei ihrer Verstellung in die Höhenrichtung führen, ausgerichtet sind.

Bei der aus der DE 10 2004 010 791 A1 bekannten Lenksäule ist eine Befestigungseinheit der Lenksäule an einem chassisfesten Lenksäulenhalter festgelegt. Hierbei weist die Befestigungseinheit seitlich abstehende Befestigungslaschen mit Schraubenöffnungen auf, durch die Befestigungsschrauben zum Verschrauben mit dem Lenksäulenhalter ragen, deren Achsen parallel zu Seitenwangen der Befestigungseinheit ausgerichtet sind, zwischen denen die die Lenkspindel drehbar lagernde Manteleinheit geführt ist.

Die DE 196 26 246 A1 zeigt eine Lenksäule, bei der zwischen den Befestigungslaschen und den Seitenwangen ein von 90° abweichender Winkel realisiert ist. Die Seitenwangen sind über nicht näher bezeichnete vertikal verlaufende Zusatzstege an den Befestigungslaschen abgestützt. Die JP 2002-145078 A zeigt diesbezüglich eine ähnliche Konstruktion.

Nachteilig an diesen vorbekannten Lenksäulen ist es, dass zur Reduktion der Schwingungsneigung und zur Erreichung der erforderlichen Steifigkeiten der Befestigung der Lenksäule sehr massiv und schwer ausgebildete Befestigungseinheiten erforderlich sind.

Aufgabe der Erfindung ist es, eine Lenksäule der eingangs genannten Art bereitzustellen, die mit hohen Festigkeits- und Steifigkeitswerten an der Fahrzeugkarosserie befestigbar ist, wobei ein vergleichsweise geringer Materialeinsatz erforderlich ist.

Erfindungsgemäß gelingt dies durch eine Lenksäule mit den Merkmalen des Anspruchs 1. Vorteilhafte Weiterbildungen der Erfindung sind in den Unteransprüchen 2 bis 14 beschrieben.

Bei einer Lenksäule gemäß der Erfindung sind somit erste und zweite Befestigungslaschen der Befestigungseinheit, über welche die Lenksäule an einem karosseriefesten Teil des Kraftfahrzeugs befestigbar ist, gegenüber der mindestens einen Seitenwange jeweils um einen Winkel im Bereich zwischen 30° und 60° geneigt. Durch die Erfindung wird eine hohe Materialeinsparung erreicht, wobei dennoch die erforderlichen Festigungs- und Steifigkeitswerte erreicht werden. Bei einer erfindungsgemäßen Lenksäule kommt es zu einem günstigen Kraftverlauf und einer geringen Neigung zu Eigenschwingungen. In optimaler und daher besonders zu bevorzugender Weise sind die ersten und zweiten Befestigungslaschen der Befestigungseinheit, über welche die Lenksäule an einem karosseriefesten Teil des Kraftfahrzeugs befestigbar ist, gegenüber der mindestens einen Seitenwange jeweils um einen Winkel von 45° geneigt.

Vorteilhafterweise können durch die erfindungsgemäße Anordnung der ersten und zweiten Befestigungslaschen auch Toleranzen der Befestigungseinheit der Lenksäule und/oder des karosseriefesten Teils, an dem diese Befestigungslaschen anzubringen sind, aufgenommen werden.

Vorzugsweise weist die Befestigungseinheit zwei Seitenwangen auf, die sich beidseitig der Manteleinheit in parallelen Ebenen erstrecken und über den Basisabschnitt verbunden sind. Wenn die Manteleinheit gegenüber der Befestigungseinheit zur Einstellung der Position des Lenkrads verstellbar ist, so kann die Manteleinheit zwischen den beiden Seitenwangen in die entsprechende Verstellrichtung, beispielsweise die Richtung der Neigungsverstellung der Lenkspindel, geführt sein. Im geschlossenen Zustand der die Verstellung der Lenksäule feststellenden Fixiereinrichtung können die beiden Seitenwangen an die Manteleinheit angedrückt sein.

In einer vorteilhaften Ausführungsvariante der Erfindung sind in einem weiter vom lenkradseitigen Ende der Lenkspindel entfernten achsialen Bereich der Lenksäule zusätzlich zu den ersten und zweiten Befestigungslaschen dritte und vierte Befestigungslaschen an der Befestigungseinheit vorgesehen. Diese können in einer Ausführungsvariante rechtwinklig zu den Seitenwangen der Befestigungseinheit von der Befestigungseinheit seitlich abstehen. In einer weiteren Ausführungsvariante sind die dritten und vierten Befestigungslaschen ebenfalls geneigt, wobei sie vorzugsweise in den gleichen Ebenen wie die ersten und zweiten Befestigungslaschen liegen.

Vorzugsweise ist die Lenksäule in achsialer Richtung der Lenkspindel und/oder in der Höhe bzw. Neigung verstellbar.

Weitere Vorteile und Einzelheiten der Erfindung werden im Folgenden anhand der beiliegenden Zeichnung erläutert. In dieser zeigen:
- Fig. 1: ein erstes Ausführungsbeispiel einer Lenksäule gemäß der Erfindung in Schräg- sicht;
- Fig. 2: eine Schrägsicht der Lenksäule von Fig. 1 aus einer anderen Blickrichtung;
- Fig. 3: die Befestigungseinheit der Lenksäule von Fig. 1 in Seitenansicht;
- Fig. 4: eine Ansicht der Befestigungseinheit (Blickrichtung B in Fig. 3), wobei ein karosse- riefestes Fahrzeugteil, an dem die Lenksäule zu befestigen ist, schematisch darge- stellt ist;
- Fig. 5: einen Schnitt entlang der Linie A-A von Fig. 3 mit einer schematischen Darstellung des karosseriefesten Fahrzeugteils und einer symbolischen Darstellung von Kräften;
- Fig. 6: eine Vergleichsdarstellung einer Befestigungseinheit gemäß dem Stand der Tech- nik;
- Fig. 7: eine Lenksäule gemäß einer weiteren Ausführungsform der Erfindung, in Schräg- sicht;
- Fig. 8: eine dritte Ausführungsform einer erfindungsgemäßen Lenksäule.

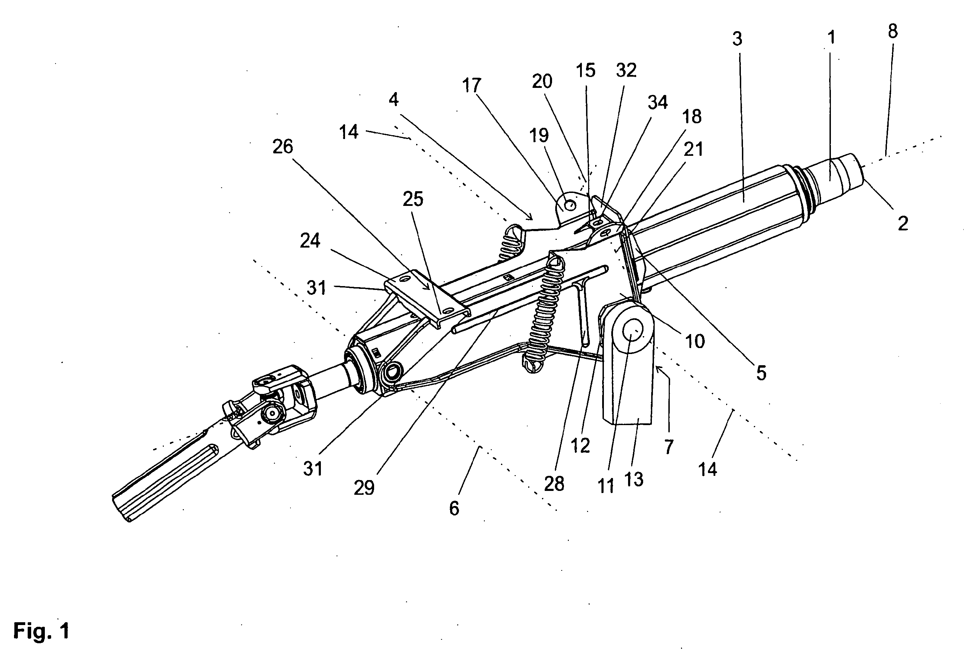

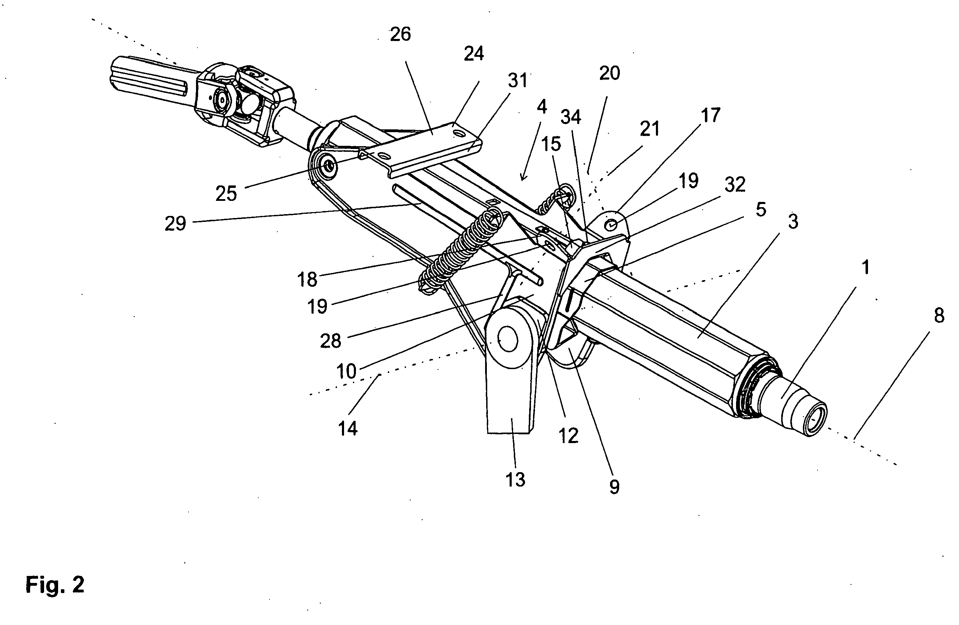

Eine erste Ausführungsform einer Lenksäule gemäß der Erfindung ist in den Fig. 1 bis 5 dargestellt. Die Lenksäule umfasst eine Lenkspindel 1, an deren lenkradseitigem Ende 2 ein Lenkrad anbringbar ist. Die Lenkspindel 1 ist in einer Manteleinheit 3 drehbar gelagert.

Die Lenksäule ist mittels einer Befestigungseinheit 4 am Kraftfahrzeug karosseriefest befestigbar. Die Befestigungseinheit 4 trägt die Manteleinheit 3 mit der darin drehbar gelagerten Lenkspindel 1.

Im gezeigten Ausführungsbeispiel ist zwischen der Manteleinheit 3 und der Befestigungseinheit 4 ein Halteteil 5 angeordnet. Dieses Halteteil 5 ist im geöffneten Zustand einer Fixiereinrichtung 7 gegenüber der Befestigungseinheit 4 um eine Schwenkachse 6 verschwenkbar, um die Neigung der Lenkspindel 1 zu verstellen (= Höhenverstellung der Lenksäule). Im geöffneten Zustand der Fixiereinrichtung 7 ist weiters die Manteleinheit 3 gegenüber dem Halteteil 5 in Richtung der Längsachse 8 der Lenkspindel 1 verstellbar (= Längenverstellung der Lenksäule).

Die Manteleinheit 3 weist an der von der Lenkspindel 1 weggerichteten Oberfläche in Umfangsrichtung mehrere ebene Flächenabschnitte auf. Das Halteteil 5, das die Manteleinheit 3 zumindest teilweise umschließt, weist in Umfangsrichtung ebenfalls mehrere ebene Flächenabschnitte auf. Die ebenen Flächenabschnitte der Manteleinheit 3 und des Halteteils 5 erstrecken sich in Richtung der Längsachse 8 der Lenkspindel 1 und zumindest je drei solcher ebenen Flächenabschnitte, die jeweils winkelig zueinander stehen, sind im geschlossenen Zustand der Fixiereinrichtung 7 in reibschlüssigen oder in reib- und formschlüssigen Kontakt bringbar, um die eingestellte Längsposition der Manteleinheit 3 zu fixieren. Durch diese Ausbildung ist die Manteleinheit 3 gegenüber dem Halteteil 5 weiters um die Längsachse 8 der Lenkspindel 1 verdrehgesichert.

Die Befestigungseinheit 4 weist zwei von einem Basisabschnitt 15 verbundene Seitenwangen 9, 10 auf, die flächige Ausdehnungen aufweisen und sich beidseitig neben der Manteleinheit 3 erstrecken. Sie liegen hierbei in der Ausführungsform gemäß den Fig. 1 bis 5 seitlich neben dem die Manteleinheit 3 zumindest teilweise umgebenden Halteteil 5. Im geschlossenen Zustand der Fixiereinrichtung 7 werden die Seitenwangen 9, 10 an das Halteteil 5 angedrückt, wobei die miteinander zusammenwirkenden Flächen der Seitenwangen 9, 10 und des Halteteils 5 in reibschlüssigen oder reib- und formschlüssigen Kontakt gebracht werden, um die Verschwenkung des Halteteils 5 und somit der Manteleinheit 3 gegenüber der Befestigungseinheit 4 festzustellen.

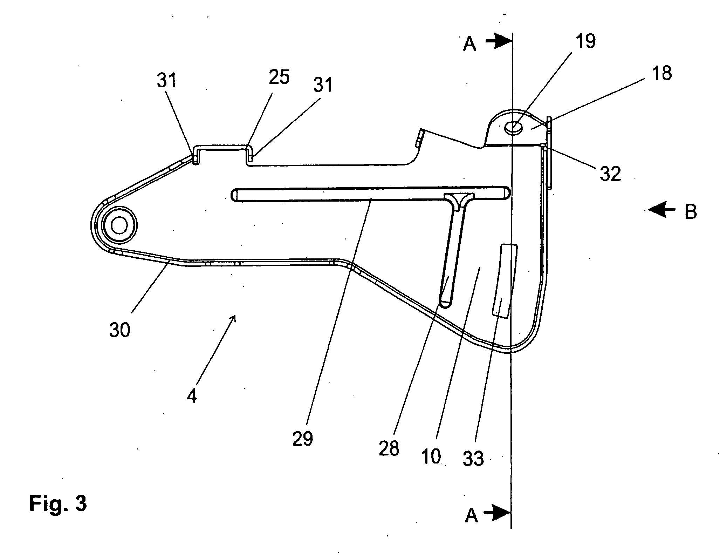

Zur Ermöglichung einer Verschwenkung des Halteteils 5 gegenüber der Befestigungseinheit 4 im geöffneten Zustand der Fixiereinrichtung 7 sind in den Seitenwangen 9, 10 Langlöcher 33 (vgl. Fig. 3) angeordnet, die von einem Fixierbolzen 11 durchsetzt werden. Der Fixierbolzen 11 durchsetzt weiters Öffnungen im Halteteil 5. Diese sind hier in der Nähe der beiden den unteren offenen Abschnitt des Halteteils begrenzenden Längsränder des Halteteils 5 angeordnet.

Die Fixiereinrichtung 7 ist in den Figuren nicht im Detail dargestellt. Sie kann in herkömmlicher Weise eine Kulissenscheibe 12 und einen vom Betätigungshebel 13 bei einer Verschwenkung desselben um die Spannachse 14 verdrehbaren Nocken aufweisen. Beim Schließen der Fixiereinrichtung 7 werden die Kulissenscheibe 12 und ein auf der dem Betätigungshebel 13 gegenüberliegenden Seite des Fixierbolzens 11 angebrachter Gegenhalter (z.B. Kopf des Fixierbolzens 11) gegen die Seitenwangen 9, 10 gedrückt. Die Fixiereinrichtung ist somit im Ausführungsbeispiel als Spannmechanismus ausgebildet.

Zur Befestigung an einem karosseriefesten Fahrzeugteil 16 weist die Befestigungseinheit 4 erste und zweite Befestigungslaschen 17, 18 auf, die mit Schraubenöffnungen 19 versehen sind. Durch diese Schraubenöffnungen 19 kann die Befestigungseinheit 4 mittels Befestigungsschrauben (nicht dargestellt in den Figuren) am karosseriefesten Fahrzeugteil 16 angeschraubt werden.

Die Befestigungslaschen 17, 18 sind gegenüber den Seitenwangen 9, 10 um Achsen parallel zur Längsachse 8 der Lenkspindel 1 geneigt angeordnet. D.h. die Befestigungslaschen 17,18 weisen zumindest im Bereich der Schraubenöffnungen 19 ebene Abschnitte auf, die in Ebenen liegen, welche mit den Ebenen, in denen sich die Seitenwangen 9, 10 erstrecken, Winkel α einschließen, die im gezeigten Ausführungsbeispiel 45° betragen. Diese Winkel α können im Bereich zwischen 30° und 60° liegen. Der Winkel α wird hierbei zwischen der Ebene eines ebenen Abschnittes der Seitenwange 9, 10 , an dem die Manteleinheit 3 anliegt, und der Ebene des ebenen Abschnitts der Befestigungslasche 17, 18 gemessen, und zwar auf der dem Fahrzeugteil 16 zugewandten Seite der Befestigungslasche 17, 18. D. h. der Winkel α ist der kleinere der Winkel, die die Ebene des ebenen Abschnitts der Seitenwange 9, 10 und die Ebene des ebenen Abschnitts der Befestigungslasche 17, 18 miteinander einschließen. Die beiden Befestigungslaschen 17, 18 sind dabei so zueinander ausgerichtet, dass sich der Abstand der ebenen Abschnitte der Befestigungslaschen 17, 18 mit größer werdendem Abstand von der Längsachse 8 der Lenkspindel 2 vergrößert. Die Befestigungslaschen 17, 18 sind somit von einer die Längsachse 8 der Lenkspindel 1 durchsetzenden Vertikalebene 22 weggeneigt.

Die Längsachsen 20, 21 der Schraubenöffnungen 19 (= die Befestigungsachsen, in welchen mit den Befestigungslaschen 17, 18 zusammenwirkende Befestigungsschrauben sich erstrecken) sind somit jeweils gegenüber den Normalen zu den Ebenen der Seitenwangen 9, 10 entsprechend geneigt und liegen hierbei mit Vorteil in einer rechtwinklig zur Längsachse 8 der Lenkspindel 1 stehenden Ebene. Im gezeigten Ausführungsbeispiel schließen die Längsachsen 20, 21 einen Winkel β von 90° miteinander ein (auf der der Lenkspindel 1 zugewandten Seite gemessen). Dieser Winkel β kann im Bereich zwischen 60° und 120° liegen.

Die erste und zweite Befestigungslasche 17, 18 sind beidseitig der durch die Längsachse 8 der Lenkspindel 1 verlaufenden Vertikalebene 22 angeordnet, wobei sie vorzugsweise in einem gegenseitigen Abstand von der Befestigungseinheit 4 ausgehen, der mindestens den Abstand zwischen den Seitenwangen 9, 10 beträgt. Es ist bevorzugt, dass die beiden Befestigungslaschen 17, 18 den gleichen Abstand vom lenkradseitigen Ende 2 der Lenkspindel 1 aufweisen.

Im gezeigten Ausführungsbeispiel geht die erste Befestigungslasche 17 von der einen Seitenwange 9 und die zweite Befestigungslasche 18 von der anderen Seitenwange 10 aus, wobei sie einstückig mit der jeweiligen Seitenwange ausgebildet sind und zur Ausbildung ihrer Neigung gegenüber der jeweiligen Seitenwange 9, 10 entsprechend abgebogen sind. Die Befestigungslaschen 17, 18 gehen hierbei von dem oberen (bezogen auf die Einbaulage) Rand der jeweiligen Seitenwange 9, 10 aus.

Die erste und zweite Befestigungslasche 17, 18 könnten auch von separaten an den Seitenwangen 9, 10 befestigten Teilen gebildet werden. Weiters könnten die Befestigungslaschen 17, 18 auch von anderen Teilen der Befestigungseinheit 4 ausgehen, beispielsweise vom Basisabschnitt 15.

Vorzugsweise schneiden sich die Ebenen, in welchen die beiden Befestigungslaschen 17, 18 liegen bzw. in welchen ihre die Schraubenöffnungen 19 umgebenden ebenen Abschnitte der Befestigungslaschen 17, 18 liegen in der Nähe der Längsachse 8 der Lenkspindel 1. Diese beiden Ebenen schneiden sich hierbei bevorzugterweise entlang einer Linie, wobei diese Linie vorzugsweise zumindest innerhalb der Manteleinheit 3 oder besonders bevorzugt innerhalb der Lenkspindel 1 liegt. Es ist dabei offensichtlich, dass im Falle einer gegenüber der Befestigungseinheit 4 höhenverstellbaren Lenkspindel 2, die Schnittlinie dieser Ebenen je nach Einstellung der Lenkspindel 2 unterschiedlich dicht zu der Längsachse 8 der Lenkspindel 2 liegt.

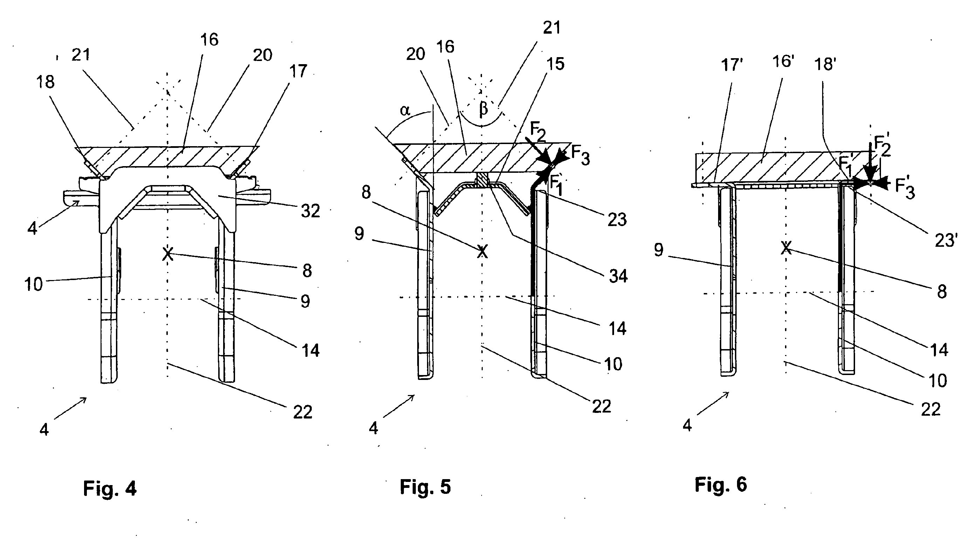

In Fig. 5 ist symbolisch die Übertragung von Kräften über eine der Befestigungslaschen 17, 18 dargestellt (es handelt sich hierbei um eine symbolische Darstellung und nicht um eine echte Kräftebilanz). Die auf die Lenkspindel wirkenden Kräfte werden über die Seitenwangen 9, 10 der Befestigungseinheit übertragen, wobei über jede der Befestigungslaschen 17, 18 zumindest ein Teil dieser Kräfte auf ein karosseriefestes Fahrzeugteil 16 abgeleitet wird. Die auf die Befestigungslasche eingeleitete Kraft F₁ muss über den Umlenkpunkt 23 von der Spannkraft F₂ der mit der Befestigungslasche zusammenwirkenden Befestigungsschraube, die senkrecht zur Ebene der Befestigungslasche 17, 18 wirkt, und von der in der Ebene der Befestigungslasche 17, 18 wirkenden Reibkraft F₃ zwischen der Befestigungslasche 17, 18 und dem karosseriefesten Fahrzeugteil 16 aufgenommen werden. Bei der erfindungsgemäßen Ausbildung ist diese Kraftübertragung wesentlich effizienter als bei einer herkömmlichen Ausbildung der Befestigungseinheit, die vergleichsweise in Fig. 6 dargestellt ist. Die Befestigungslaschen 17', 18' liegen hier rechtwinklig zu den Ebenen der Seitenwangen 9, 10 und sind mit dem karosseriefesten Fahrzeugteil 16' verschraubt. Analoge Teile wie beim zuvor beschriebenen erfindungsgemäßen Ausführungsbeispiel sind mit den gleichen Bezugszeichen versehen. Die Übertragung der auf die jeweilige Seitenwange 9, 10 eingeleiteten Kraft F₁' und Aufnahme dieser Kraft durch die Normalkomponente F₂' der Haltekraft und die Reibkomponente F₃' der Haltekraft ist hier wesentlich weniger effizient, wobei die Kraft F₁' um einen Umlenkpunkt 23' geführt wird, dessen Umlenkung 90° beträgt, im Gegensatz zum Umlenkwinkel im Umlenkpunkt 23 von 30° bis 60° gemäß der Erfindung. Es ist dabei offensichtlich, dass mit zunehmender Einschränkung des Winkelbereichs im Umlenkpunkt 23 in die Nähe der 45°, die Umlenkung der Kraft verbessert wird. Je größer die Abweichung von den 45° liegt, desto größer ist der Unterschied zwischen den Kraftkomponenten, parallel zur Vertikalebene 22 und senkrecht zur Vertikalebene 22, in die sich die in den Umlenkungspunkt eingeleitete Kraft aufgespaltet. Damit die Kraft tatsächlich umgelenkt und in das Fahrzeugteil 16 eingeleitet werden kann, müssen die beiden Kraft-Komponenten in der Befestigungseinheit 4 im Bereich des Umlenkungspunktes 23 abgestützt werden. Entsprechend massiv und steif muss die Befestigungseinheit 4 ausgelegt sein. Im Fall, dass die Befestigungseinheit nicht genügend massiv und steif ausgelegt ist, erfolgt eine Verformung der Befestigungseinheit als Reaktion auf die eingeleitete Kraft. Diese Verformungen sind jedoch stets unerwünscht und führen zu einem unsicheren Lenkgefühl und zu einem negativen Schwingungsverhalten. Im Falle eines Umlenkwinkels von 90° sind die Anforderungen an die Befestigungseinheit 4 entsprechend besonders hoch. Mit einem erfindungsgemäßen Umlenkwinkel im Bereich von 30° bis 60° wird bereits eine erhebliche Verbesserung der Spannungsverhältnisse im Bereich des Umlenkpunktes 23 erreicht. Entsprechend sinken durch die erfindungsgemäße Lösung die Belastungen in der Befestigungseinheit erheblich. So wird es möglich, bei gleichen Belastungen die Befestigungseinheit mit wesentlich geringeren Querschnitten zu dimensionieren.

Der Unterschied der beiden Kraftkomponenten ist so weit reduziert, dass der Einsatz einer Befestigungseinheit 4 ausgebildet als einfaches Blech-Biege-Stanzteil mit einem einfachen Verstärkungsblech, das ebenfalls als einfaches Blech-Biege-Stanzteil ausgebildet ist, genügt, um in den meisten Fällen die Anforderungen an die Steifigkeit zu erfüllen.

Die erfindungsgemäße Befestigungseinheit weist im gezeigten Ausführungsbeispiel zusätzlich zu den Befestigungslaschen 17, 18 weitere Befestigungselemente auf, die von einer dritten und einer vierten Befestigungslasche 24, 25 gebildet werden, welche einen größeren Abstand vom lenkradseitigen Ende 2 der Lenkspindel 1 als die erste und zweite Befestigungslasche 17, 18 aufweisen und beidseitig der Vertikalebene 22 von der Befestigungseinheit 4 abstehen. Diese dritte und vierte Befestigungslasche 24, 25 werden in diesem Ausführungsbeispiel von den gegenüber den Seitenwangen 9, 10 seitlich abstehenden Abschnitten eines Querstegs 26 der Befestigungseinheit 4 gebildet. Die Befestigungslaschen 24, 25 liegen hierbei in rechtwinklig zu den Seitenwangen 9,10 stehenden Ebenen. Zur Befestigung am Kraftfahrzeug mittels Befestigungsschrauben sind wiederum Schraubenöffnungen 27 vorhanden.

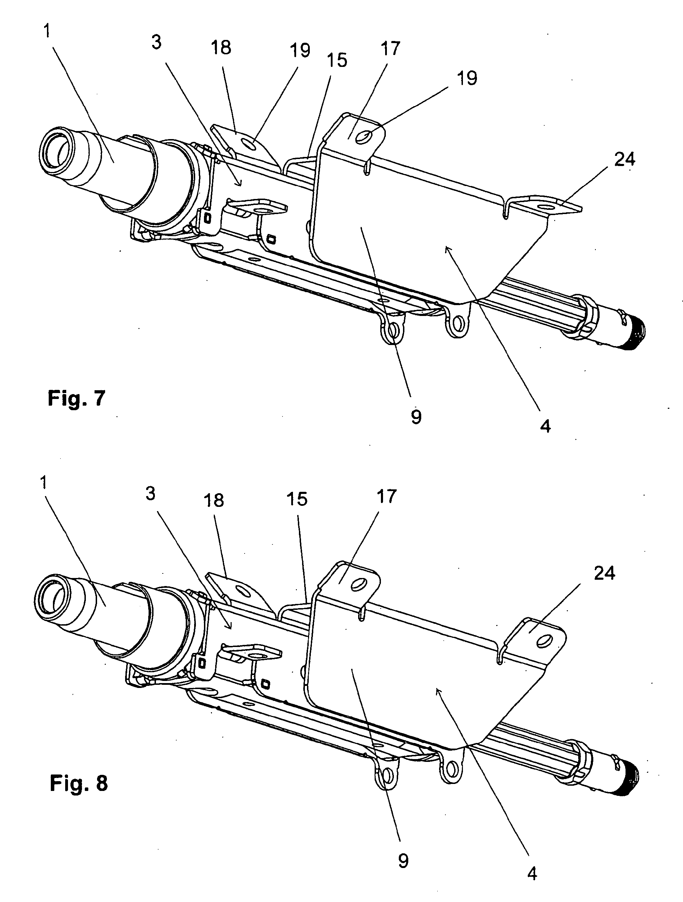

Die dritte und vierte Befestigungslasche könnten auch in analoger Weise wie die erste und zweite Befestigungslasche 17, 18 zu den Seitenwangen 9, 10 geneigt sein, wie dies weiter unten noch im Zusammenhang mit dem Ausführungsbeispiel gemäß Fig. 8 beschrieben ist.

Die Befestigungseinheit ist im gezeigten Ausführungsbeispiel als Blech-Biege-Stanzteil ausgeführt. Zur Verstärkung der Befestigungseinheit 4 sind in den Seitenwangen 9, 10 Verstärkungssicken 28, 29 ausgebildet. Weiters können die Seitenwangen 9, 10 wie dargestellt mit randseitigen Umbördelungen 15 versehen sein. Umbördelungen 31 können beispielsweise auch an den Rändern des Querstegs 26 und/oder am Basisabschnitt 15 vorgesehen werden.

Weiters ist im gezeigten Ausführungsbeispiel am lenkradseitigen Ende der Befestigungseinheit 4 ein Verstärkungsblech 32 angeschweißt, welches sich in einer rechtwinklig zur Längsachse 8 der Lenkspindel 1 liegenden Ebene erstreckt und an beiden Seitenwangen 9, 10 angebracht ist. Im gezeigten Beispiel ist das Verstärkungsblech 32 einteilig mit dem Basisabschnitt 15 ausgebildet. Denkbar und möglich sind jedoch auch zwei- und mehrteilige Ausführungsformen.

Die Seitenwangen 9, 10 und/oder der Basisabschnitt 15 der Befestigungseinheit 4 können auch aus mehreren starr miteinander verbundenen Teilen bestehen. Beispielsweise könnte ein Teil einen lenkradseitigen Abschnitt der Befestigungseinheit 4 und ein Teil einen lenkradfernen Abschnitt der Befestigungseinheit 4 bilden. Auch eine andere Ausbildung als in Form eines Blech-Biege-Stanzteils ist denkbar und möglich.

Beispielsweise könnte die Befestigungseinheit 4 auch ein Befestigungsteil aufweisen, um im Crashfall Energie abzubauen. Die Befestigungslaschen 17,18, 24, 25 sind dann an diesem Befestigungsteil angeordnet. Ein solcher Energieabbau kann alternativ oder zusätzlich auch durch ein Durchrutschen der Manteleinheit 3 gegenüber dem Halteteil 5 erreicht werden.

Zusätzlich können jedoch in einer Weiterbildung der Erfindung Positioniermittel 34 vorgesehen sein, die die Lage der Befestigungseinheit 4 zum Fahrzeugteil 16 zusätzlich definieren. Diese zusätzlichen Positioniermittel 34 können zur Vereinfachung der Montage der Lenksäule im Fahrzeug Anwendung finden. Im einfachsten Fall handelt es sich dabei um eine Bohrung im Befestigungsteil 4, die mit einem Zapfen im Fahrzeugteil 16 zusammenwirkt.

Ein weiteres Ausführungsbeispiel der Erfindung ist in Fig. 7 dargestellt. Die Lenkspindel 1 ist wiederum drehbar in einer Manteleinheit 3 gelagert. Diese wird von einer Befestigungseinheit 4 getragen, welche beidseitig der Manteleinheit 3 sich erstreckende Seitenwangen 9, 10 aufweist. Die Manteleinheit 3 ist in diesem Ausführungsbeispiel starr mit den Seitenwangen 9, 10 verbunden. Entsprechend ist in diesem Ausführungsbeispiel die Manteleinheit 3 gegenüber der Befestigungseinheit 4 weder in der Höhe noch in der Länge verstellbar.

Die Befestigungseinheit 4 weist erste und zweite Befestigungslaschen 17, 18 auf, die in gleicher Weise wie zuvor beschrieben gegenüber den Seitenwangen 9, 10 der Befestigungseinheit 4 geneigt sind. Diese Befestigungslaschen 17, 18 gehen wiederum von den oberen Enden der Seitenwangen 9, 10 aus.

Weiters weist die Befestigungseinheit 4 dritte und vierte Befestigungslaschen 24, 25 auf, welche ebenfalls von den oberen Enden der Seitenwangen 9, 10 ausgehen und rechtwinklig zu diesen stehen. Die dritten und vierten Befestigungslaschen 24, 25 sind weiter vom lenkradseitigen Ende 2 der Lenkspindel 1 entfernt als die ersten und zweiten Befestigungslaschen 17, 18.

Alternativ ist es denkbar, auch und möglich die dritten und vierten Befestigungslasche 24, 25 näher zum lenkradseitigen Ende 2 der Lenkspindel als die erste und zweite Befestigungslaschen 17, 18 anzuordnen. Das kann dann sinnvoll sein, wenn auf die Lenksäule eine entsprechende Verteilung der Belastungen vorliegt. Gleiches gilt auch für andere Ausführungsformen der Erfindung. Mit Vorteil sind bei Verstellbaren Lenksäulen die abgewinkelten Befestigungslaschen 17, 18 auf dem Achsabschnitt der Längsachse 8 angeordnet in dem die Fixiereinrichtung 7 angeordnet ist.

Wiederum könnte die Befestigungseinheit 4 Verstärkungselemente aufweisen, beispielsweise analog den im Zusammenhang mit dem ersten Ausführungsbeispiel beschriebenen Verstärkungssicken 28, 29, Umbördelungen 30, 31 und dem Verstärkungsblech 32 (nicht dargestellt in Fig. 7).

Die Befestigungseinheit 4 könnte wiederum auch mehrteilig ausgebildet sein. Hierbei könnten die Befestigungslaschen 17, 18, 24, 25 wiederum an einem Befestigungsteil der Befestigungseinheit 4 angeordnet sein, welches gegenüber dem Basisabschnitt energieaufzehrend verschiebbar ist, um im Crashfall Energie abzubauen.

Das in Fig. 8 dargestellte dritte Ausführungsbeispiel unterscheidet sich gegenüber dem in Fig. 7 dargestellten Ausführungsbeispiel nur durch die Stellung der dritten und vierten Befestigungslaschen 24, 25. Diese sind analog den ersten und zweiten Befestigungslaschen 17, 18 gegenüber den Seitenwangen 9, 10 geneigt, beispielsweise um einen Winkel von 45°. Die Neigung erfolgt wiederum um eine parallel zur Längsachse 8 der Lenkspindel 1 liegende Achse. Vorzugsweise weisen die dritten und vierten Befestigungslaschen 24, 25 die gleichen Neigungswinkel wie die ersten und zweiten Befestigungslaschen 17, 18 auf.

Unterschiedliche Modifikationen der dargestellten Ausführungsbeispiele sind denkbar und möglich, ohne den Bereich der Erfindung zu verlassen.

So kann die Lenksäule unterschiedliche Arten von Verstellmechanismen zur achsialen Verstellung der Lenkspindel 1 und/oder Neigungsverstellung der Lenkspindel 1 aufweisen, die in herkömmlicher Weise ausgebildet sein können. Neben reibschlüssig wirkenden Fixiereinrichtungen können auch formschlüssig oder form- und reibschlüssig wirkende Fixiereinrichtungen eingesetzt werden, wie diese im Stand der Technik bekannt sind.

Beim karosseriefesten Fahrzeugteil 16 kann es sich direkt um ein Teil der Fahrzeugkarosserie oder ein an der Fahrzeugkarosserie befestigtes Teil handeln, welches zumindest im Normalbetrieb starr mit der Fahrzeugkarosserie verbunden ist (für den Crashfall können Verschiebungen ermöglicht sein).

Die Schraubenöffnungen 19 können anstelle in Form von Löchern auch von zu den Rändern der Befestigungslaschen 17, 18, 24, 25 offenen schlitzförmigen Ausnehmungen gebildet werden.

Die erfindungsgemäße Lenksäule kann zusätzlich zu den ersten und zweiten Befestigungslaschen 17, 18 auch mindestens ein weiteres Befestigungselement zur Befestigung an einem karosseriefesten Fahrzeugteil aufweisen, welches in anderer Form als in einer zur Verschraubung dienenden Befestigungslasche ausgebildet ist, beispielsweise von einem hakenförmigen Teil gebildet wird.

Anstelle von zwei parallel zur Vertikalebene 27 liegenden Seitenwangen 9, 10 kann auch nur eine einzelne solche Seitenwange 9, 10 vorhanden sein, wobei in diesem Fall zumindest die auf der der Seitenwange 9, 10 gegenüberliegenden Seite der Vertikalebene 22 liegende Befestigungslasche 17, 18 vom oberhalb (bezogen auf die Einbaulage) der Lenkspindel 1 liegenden Basisabschnitt 15 der Befestigungseinheit 4 ausgehen würde.

### Legende

### zu den Hinweisziffern:

- 1: Lenkspindel
- 2: Ende
- 3: Manteleinheit
- 4: Befestigungseinheit
- 5: Halteteil
- 6: Schwenkachse
- 7: Fixiereinrichtung
- 8: Längsachse
- 9: Seitenwange
- 10: Seitenwange
- 11: Fixierbolzen
- 12: Kulissenscheibe
- 13: Betätigungshebel
- 14: Spannachse
- 15: Basisabschnitt
- 16, 16': Fahrzeugteil
- 17, 17': erste Befestigungslasche
- 18, 18': zweite Befestigungslasche
- 19: Schraubenöffnung
- 20: Längsachse
- 21: Längsachse
- 22: Vertikalebene
- 23: Umlenkpunkt
- 24: dritte Befestigungslasche
- 25: vierte Befestigungslasche
- 26: Quersteg
- 27: Schraubenöffnung
- 28: Verstärkungssicke
- 29: Verstärkungssicke
- 30: Umbördelung
- 31: Umbördelung
- 32: Verstärkungsblech
- 33: Langloch
- 34: Positioniermittel

## Patentansprüche

1. Lenksäule für ein Kraftfahrzeug mit einer von einer Manteleinheit (3) drehbar gelagerten Lenkspindel (1) und einer am Kraftfahrzeug starr befestigbaren, die Manteleinheit (3) tragenden Befestigungseinheit (4), die einen Basisabschnitt (15), mindestens eine sich neben der Manteleinheit (3) erstreckende Seitenwange (9, 10) und zumindest erste und zweite Befestigungslaschen (17, 18) mit Schraubenöffnungen (19) zur Befestigung der Befestigungseinheit (4) am Kraftfahrzeug mittels Befestigungsschrauben umfasst, **dadurch gekennzeichnet, dass** die erste und zweite Befestigungslasche (17, 18) gegenüber der mindestens einen Seitenwange (9, 10) jeweils um einen Winkel im Bereich zwischen 30° und 60° geneigt angeordnet ist.

2. Lenksäule nach Anspruch 1, **dadurch gekennzeichnet, dass** die erste und zweite Befestigungslasche (17, 18) beidseitig einer durch die Lenkspindel (1) verlaufenden Vertikalebene (22) angeordnet sind.

3. Lenksäule nach Anspruch 1 oder 2, **dadurch gekennzeichnet, dass** die erste und zweite Befestigungslasche (17, 18) den gleichen Abstand von einem lenkradseitigen Ende (2) der Lenkspindel (1) aufweisen.

4. Lenksäule nach einem der Ansprüche 1 bis 3, **dadurch gekennzeichnet, dass** die Befestigungseinheit (4) zwei parallele Seitenwangen (9, 10) umfasst, die sich beidseitig der Manteleinheit (3) erstrecken und mit dem Basisabschnitt (15) verbunden sind.

5. Lenksäule nach Anspruch 4, **dadurch gekennzeichnet, dass** die erste Befestigungslasche (17) von der einen Seitenwange (9) und die zweite Befestigungslasche (18) von der anderen Seitenwange (10) ausgehen.

6. Lenksäule nach einem der Ansprüche 1 bis 5, **dadurch gekennzeichnet, dass** die erste und zweite Befestigungslasche (17, 18) zumindest im Bereich der jeweiligen Schraubenöffnung (19) in ersten und zweiten Ebenen liegen, die sich innerhalb der Manteleinheit (3), vorzugsweise innerhalb der Lenkspindel (1) schneiden.

7. Lenksäule nach einem der Ansprüche 1 bis 6, **dadurch gekennzeichnet, dass** die Befestigungseinheit (4) zusätzlich zu den ersten und zweiten Befestigungslaschen (17, 18) mindestens ein weiteres Befestigungselement zur Befestigung der Befestigungseinheit (4) am Kraftfahrzeug aufweist.

8. Lenksäule nach Anspruch 7, **dadurch gekennzeichnet, dass** das mindestens eine weitere Befestigungselement einen größeren Abstand vom lenkradseitigen Ende (2) der Lenkspindel (1) als die ersten beiden Befestigungslaschen (17, 18) aufweist.

9. Lenksäule nach Anspruch 7 oder 8, **dadurch gekennzeichnet, dass** die Befestigungseinheit (4) als weitere Befestigungselemente dritte und vierte Befestigungslaschen (24, 25) aufweist, die beidseitig einer durch die Lenkspindel (1) verlaufenden Vertikalebene (22) angeordnet sind.

10. Lenksäule nach Anspruch 9, **dadurch gekennzeichnet, dass** die dritte und vierte Befestigungslasche (24, 25) gegenüber der mindestens einen Seitenwange (9, 10) jeweils geneigt angeordnet sind und in den gleichen Ebenen wie die ersten und zweiten Befestigungslaschen (17, 18) liegen.

11. Lenksäule nach Anspruch 9 oder 10, **dadurch gekennzeichnet, dass** die dritte Befestigungslasche (24) von der einen Seitenwange (9) und die vierte Befestigungslasche (25) von der anderen Seitenwange (10) ausgehen.

12. Lenksäule nach einem der Ansprüche 1 bis 11, **dadurch gekennzeichnet, dass** die Manteleinheit (3) gegenüber der Befestigungseinheit (4) in mindestens eine Verstellrichtung verstellbar ist.

13. Lenksäule nach Anspruch 12, **dadurch gekennzeichnet, dass** die Manteleinheit (3) gegenüber der Befestigungseinheit (4) in Längsrichtung der Lenkspindel (1) und/oder in Richtung einer Neigungsverstellung der Lenkspindel (1) verstellbar ist.

14. Lenksäule nach einem der Ansprüche 1 bis 13, **dadurch gekennzeichnet, dass** sich die mindestens eine Seitenwange (9, 10) in einer Ebene erstreckt, die parallel zu einer durch die Lenkspindel (1) verlaufenden Vertikalebene (22) liegt.

## Claims

1. A steering column for a motor vehicle, having a steering spindle (1), rotatably mounted by a jacket unit (3), and a fastening unit (4), rigidly fastenable to the motor vehicle and bearing the jacket unit (3), which comprises a base portion (15), at least one lateral cheek (9, 10) extending alongside the jacket unit (3) and at least first and second fastening lugs (17, 18) with screw openings (19) to fasten the fastening unit (4) to the motor vehicle by means of fastening screws, **characterised in that** the first and second fastening lugs (17, 18) are in each case arranged inclined at an angle in the range between 30° and 60° with respect to the at least one lateral cheek (9, 10).

2. A steering column according to claim 1, **characterised in that** the first and second fastening lugs (17, 18) are arranged on either side of a vertical plane (22) running through the steering spindle (1).

3. A steering column according to claim 1 or 2, **characterised in that** the first and second fastening lugs (17, 18) are at the same distance from an end (2), located at the side closest to the steering wheel, of the steering spindle (1).

4. A steering column according to any one of claims 1 to 3, **characterised in that** the fastening unit (4) comprises two parallel lateral cheeks (9, 10) which extend on either side of the jacket unit (3) and which are connected to the base portion (15).

5. A steering column according to claim 4, **characterised in that** the first fastening lug (17) issues from one lateral cheek (9) and the second fastening lug (18) from the other lateral cheek (10).

6. A steering column according to any one of claims 1 to 5, **characterised in that** at least in the region of the respective screw opening (19), the first and second fastening lugs (17, 18) lie in first and second planes intersecting within the jacket unit (3), preferably within the steering spindle (1).

7. A steering column according to any one of claims 1 to 6, **characterised in that** in addition to the first and second fastening lugs (17, 18), the fastening unit (4) has at least one further fastening element to fasten the fastening unit (4) to the motor vehicle.

8. A steering column according to claim 7, **characterised in that** the at least one further fastening element is at a greater distance from the end (2), located at the side closest to the steering wheel, of the steering spindle (1) than the first two fastening lugs (17, 18).

9. A steering column according to claim 7 or 8, **characterised in that** the fastening unit (4) has third and fourth fastening lugs (24, 25) as further fastening elements, which lugs (24, 25) are arranged on either side of a vertical plane (22) running though the steering spindle (1).

10. A steering column according to claim 9, **characterised in that** the third and fourth fastening lugs (24, 25) are in each case arranged at an incline to the at least one lateral cheek (9, 10) and lie in the same planes as the first and second fastening lugs (17, 18).

11. A steering column according to claim 9 or 10, **characterised in that** the third fastening lug (24) issues from one lateral cheek (9) and the fourth fastening lug (25) from the other lateral cheek (10).

12. A steering column according to any one of claims 1 to 11, **characterised in that** the jacket unit (3) is adjustable with respect to the fastening unit (4) in at least one adjustment direction.

13. A steering column according to claim 12, **characterised in that** the jacket unit (3) is adjustable with respect to the fastening unit (4) in the longitudinal direction of the steering spindle (1) and/or in the direction of an inclination adjustment of the steering spindle (1).

14. A steering column according to any one of claims 1 to 13, **characterised in that** the at least one lateral cheek (9, 10) extends in a plane lying parallel to a vertical plane (22) running through the steering spindle (1).

## Revendications

1. Colonne de direction pour un véhicule automobile comportant un tube avec un arbre de direction (1) monté rotatif dans une enveloppe (3), et une unité de fixation (4) reliée solidairement au véhicule, l'unité de fixation (4) portant l'enveloppe (3) et qui comprend un segment de base (15), au moins une face latérale (9, 10) s'étendant à côté de l'enveloppe (3) et au moins une première et une seconde bride de fixation (17, 18) avec des ouvertures pour des vis (19) pour la fixation de l'unité de fixation (4) au véhicule automobile au moyen de vis de fixation,
**caractérisée en ce que**
la première et la seconde bride de fixation (17, 18) sont disposées inclinées par rapport à au moins une face latérale (9, 10) à chaque fois d'un angle situé dans la plage entre 30° et 60°.

2. Colonne de direction selon la revendication 1,
**caractérisée en ce que**
la première et la seconde bride de fixation (17, 18) sont disposées de part et d'autre d'un plan vertical (22) s'étendant à travers le tube avec l'arbre de direction (1).

3. Colonne de direction selon la revendication 1 ou 2,
**caractérisée en ce que**
la première et la seconde bride de fixation (17, 18) sont équidistantes de l'extrémité (2) du côté du volant du tube avec l'arbre de direction (1).

4. Colonne de direction selon l'une des revendications 1 à 3,
**caractérisée en ce que**
l'unité de fixation (4) comprend deux faces latérales (9, 10) parallèles qui s'étendent de part et d'autre de l'enveloppe (3) et sont reliées au segment de base (15).

5. Colonne de direction selon la revendication 4,
**caractérisée en ce que**
la première bride de fixation (17) est issue de la paroi latérale (9) et la seconde bride de fixation (18) est issue de l'autre paroi latérale (10).

6. Colonne de direction selon l'une des revendications 1 à 5,
**caractérisée en ce que**
la première et la seconde bride de fixation (17, 18) se trouvent au moins dans la zone des ouvertures pour les vis (19) correspondantes dans un premier et un second plan qui se coupent à l'intérieur de l'enveloppe (3), de préférence à l'intérieur du tube avec l'arbre de direction (1).

7. Colonne de direction selon l'une des revendications 1 à 6,
**caractérisée en ce que**
l'unité de fixation (4) à présente en plus de la première et seconde bride de fixation (17, 18) au moins un autre élément de fixation pour la fixation de l'unité de fixation (4) au véhicule automobile.

8. Colonne de direction selon la revendication 7,
**caractérisée en ce qu'**
au moins un autre élément de fixation présente un plus grand intervalle par rapport à l'extrémité (2) du côté du volant du tube avec l'arbre de direction (1) que la première des deux brides de fixation (17, 18).

9. Colonne de direction selon la revendication 7 ou 8,
**caractérisée en ce que**
l'unité de fixation (4) présente une troisième et une quatrième bride de fixation (24, 25) en tant qu'éléments de fixation, se trouvant de part et d'autre du plan vertical (22) s'étendant à travers le tube avec l'arbre de direction (1).

10. Colonne de direction selon la revendication 9,
**caractérisée en ce que**
les troisièmes et quatrièmes brides de fixation (24, 25) sont chaque fois inclinées par rapport à une paroi latérale (9, 10), et se trouvent dans le même plan que la première et la seconde bride de fixation (17, 18).

11. Colonne de direction selon la revendication 9 ou 10,
**caractérisée en ce que**
la troisième bride de fixation (24) s'étend à partir de la première face latérale (9) et que la seconde bride de fixation (25) s'étend à partir de l'autre face latérale (10).

12. Colonne de direction selon l'une des revendications 1 à 11,
**caractérisée en ce que**
l'enveloppe (3) peut être réglée par rapport à l'unité de fixation (4) dans au moins une direction de réglage.

13. Colonne de direction selon la revendication 12,
**caractérisée en ce que**
l'enveloppe (3) peut être réglée par rapport à l'unité de fixation (4) dans la direction longitudinale du tube avec l'arbre de direction (1) et/ou dans la direction d'une position d'inclinaison du tube.

14. Colonne de direction selon l'une des revendications 1 à 13,
**caractérisée en ce qu'**
au moins une face latérale (9, 10) s'étend dans un plan parallèle à un plan vertical (22) passant par le tube avec l'arbre de direction (1).
